# EUROPEAN PATENT SPECIFICATION

(11) **EP 2 892 249 B1**
(45) Date of publication and mention of the grant of the patent: **27.06.2018**
(21) Application number: 14200026.4
(22) Date of filing: 23.12.2014
(51) Int. Cl.: H04R 27/02, H01Q 1/27

(54) **Control device for induction loop system**
Steuerungsvorrichtung für ein Induktionsschleifensystem
Dispositif de commande pour système de boucle d'induction

(30) Priority: 03.01.2014 FI 20145004
(43) Date of publication of application: 08.07.2015
(73) Proprietor: Telesilmukka Oy, 90450 Kempele (FI)
(72) Inventor: Saarimaa, Juha, 90450 Kempele (FI); Niemitalo, Paavo, 90450 Kempele (FI)
(74) Representative: Kolster Oy Ab

(56) References cited:
- WO-A1-89/08970

## Description

### FIELD OF THE INVENTION

The invention relates generally to improving hearing experience for hearing-impaired persons, and more particularly to control devices for induction loop systems.

### BACKGROUND

Induction loop systems may be used for improving the voice quality for hearing aid devices. Induction loop systems comprise induction loops, which transmit audio signals wirelessly to a person's hearing aid device via electromagnetic fields. Patent document WO 8908970 presents induction loop driving amplifiers.

### BRIEF DESCRIPTION OF THE INVENTION

According to an aspect of the invention, there is provided a control device as specified in claim 1.

According to the invention, there is provided a method for use in an induction loop system, comprising: generating a calibration signal having a known amplitude and frequency, feeding the calibration signal to an induction loop amplifier, detecting level of electric current at the output of the induction loop amplifier, and determining an adjustment model on the basis of the detected level of electric current and the known amplitude and frequency, wherein the adjustment model is for adjusting the amplitude of a to-be-fed output signal based on the frequency of a to-be-received input audio signal such that the level of the electric current at the output of the induction loop amplifier is within predetermined limits.

According to an aspect of the invention, there is provided a computer program product embodied on a distribution medium readable by a computer and comprising program instructions which, when loaded into a control device for an induction loop system, cause the control device to execute at least the following steps: generating a calibration signal having a known amplitude and frequency, feeding the calibration signal to an induction loop amplifier, detecting level of electric current at the output of the induction loop amplifier, and determining an adjustment model on the basis of the detected level of electric current and the known amplitude and frequency, wherein the adjustment model is for adjusting the amplitude of a to-be-fed output signal based on the frequency of a to-be-received input audio signal such that the level of the electric current at the output of the induction loop amplifier is within predetermined limits.

According to an aspect of the invention, there is provided a computer-readable distribution medium carrying the above-mentioned computer program product.

According to an aspect of the invention, there is provided a control device for an induction loop system, comprising input interface means for receiving an input audio signal from an audio source, output interface means for transmitting an output signal to an induction loop amplifier, wherein the induction loop amplifier is configured to feed an induction loop, processing means for generating a calibration signal having a known amplitude and frequency, processing means for feeding the calibration signal to the induction loop amplifier, processing means for detecting level of electric current at the output of the induction loop amplifier, and processing means for determining an adjustment model on the basis of the detected level of electric current and the known amplitude and frequency, wherein the adjustment model is for adjusting the amplitude of a to-be-fed output signal based on the frequency of a to-be-received input audio signal such that the level of the electric current at the output of the induction loop amplifier is within predetermined limits.

According to an aspect of the invention, there is provided an apparatus comprising means for performing any of the embodiments as described in the appended claims.

Embodiments of the invention are defined in the dependent claims.

### LIST OF THE DRAWINGS

In the following, the invention will be described in greater detail with reference to the embodiments and the accompanying drawings, in which
Figure 1A presents an example induction loop system;
Figure 1B presents an example table showing how the current may vary in an induction loop of the induction loop system;
Figure 2A shows an induction loop system, according to an embodiment;
Figure 2B shows an example on how to convert an input audio signal into digital output signal;
Figure 4 shows an adjustment model and how it may be used to affect the current flow in the induction loop;

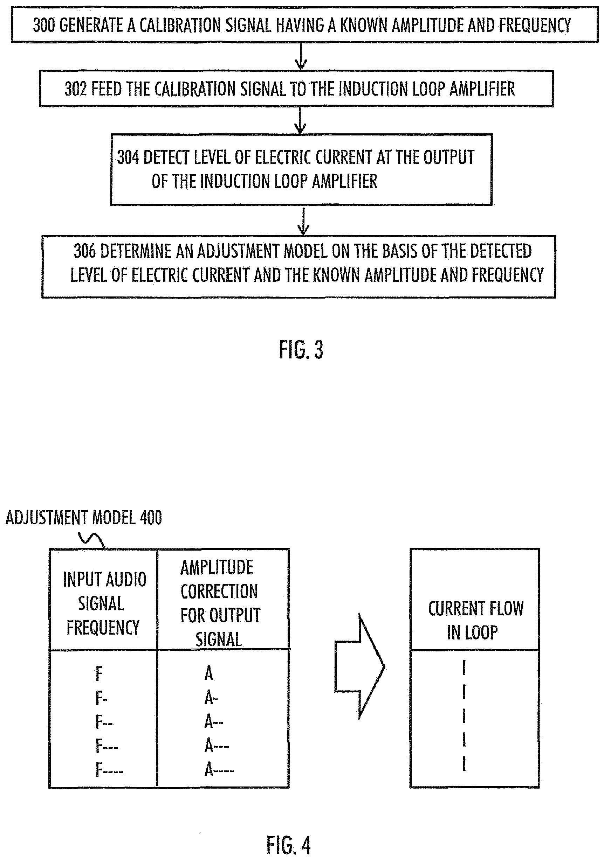

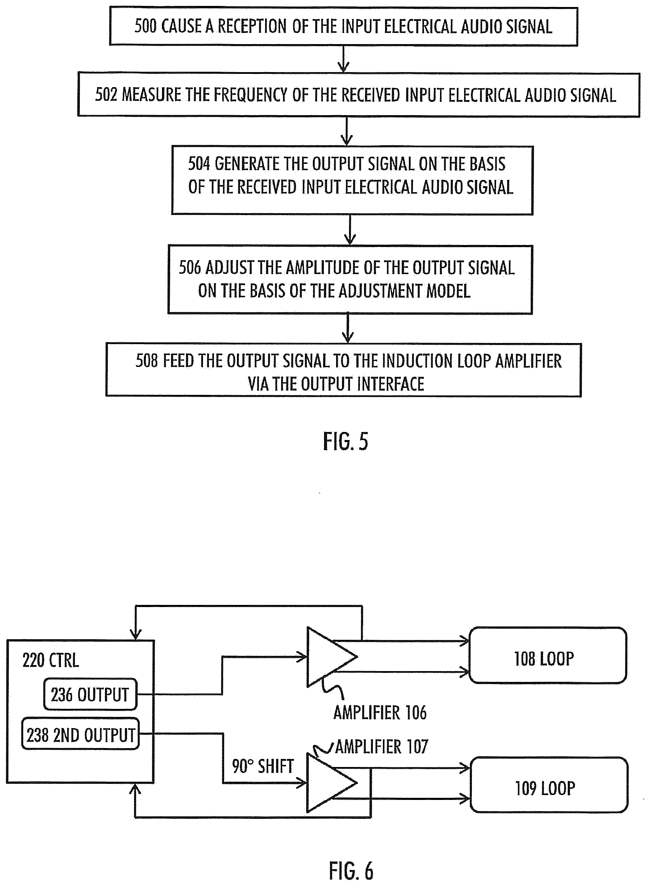

Figure 3 and 5 depict methods according to some embodiments;
Figure 6 shows an example of how a phase shift may be used for an induction loop system applying two amplifiers;

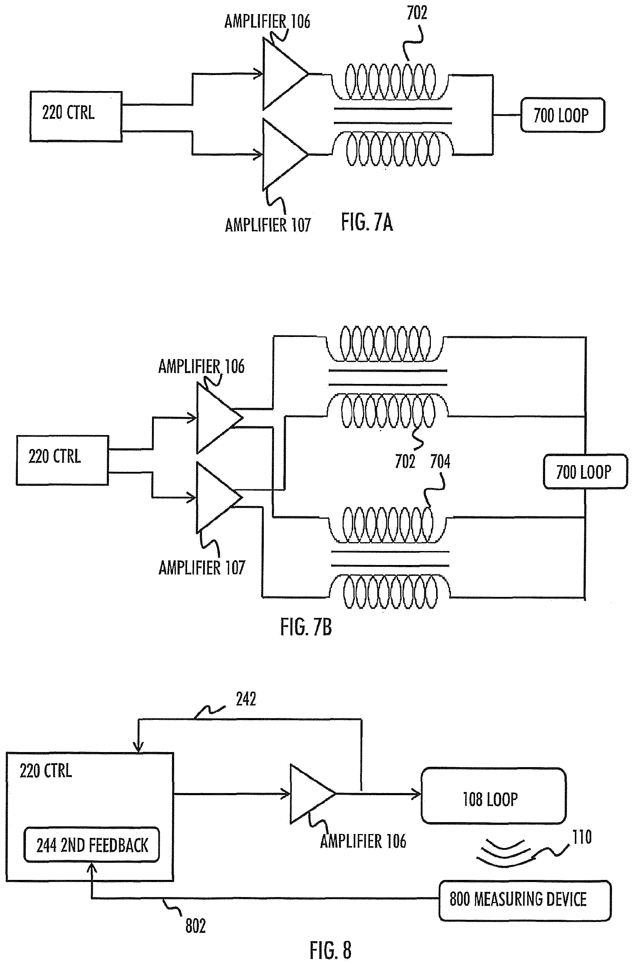

Figures 7A and 7B illustrate use of transformers in an induction loop system, according to some embodiments; and
Figure 8 depicts further adjustment of the adjustment model, according to an embodiment.

### DESCRIPTION OF EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

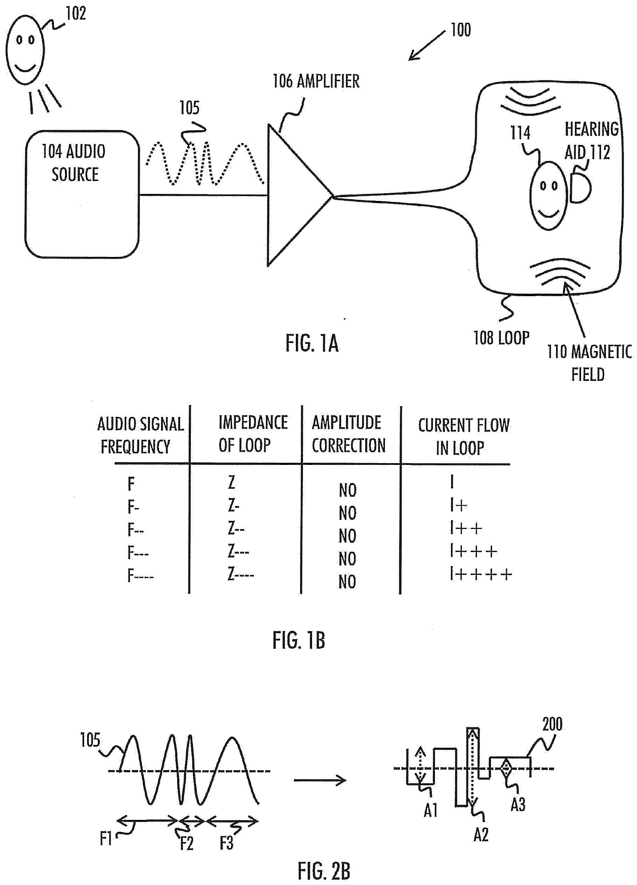

Figure 1A shows an example induction loop system 100, also known as an audio-frequency loop system (AFIL) or a hearing loop. The system 100 may include an electrical audio signal source 104, such as transducer. One example of the electrical audio signal source 104 may be a microphone to which a speaker 102 speaks to. The audio signal detected by the microphone is converted into electrical audio signal 105 which may be amplified by an induction loop amplifier 106 and then conducted to an induction loop 108. The amplifier 106 thus feeds an output signal to the loop 108. This output signal may generate a flow of electric current in the loop 108, which consequently generates electromagnetic field 110 proportional to the intensity of electric current flowing in the loop 108. The electromagnetic field 110 radiates in space around the loop 108, as shown in Figure 1A. The induction loop 108 may be a loop of cable around a designated area, such as a room or a building, or a special counter loop located, e.g. underside of a table. Induction loops 108 may be fixed or portable.

The hearing aid (device) 112, which a listener 114 wears in his/her ear, may comprise a coil or another suitable magnetic field receiver. As a result, the wireless electromagnetic field 110 is detectable by the coil in the hearing aid 112. The received wireless magnetic field 110 may generate a flow of current in the coil of the hearing aid 112. Then the hearing aid 112 may to transform this generated current into an output audio signal which may be further amplified and finally output as an acoustic signal to listener's 114 ear.

In an embodiment, one of the reception modes (typically mode "T") of the hearing aid device 112 may determine that the hearing aid device 112 receives the wirelessly transmitted electromagnetic field 110, but not the background noise. The background noise may be cancelled because the microphone of the hearing aid 112 may be inactivated in the reception mode "T", for example. In this way, the background noise is not interfering and does not cause problems to the listening person. In an embodiment, the hearing aid also includes a possibility for a double mode, such as an "MT" mode, in which the microphone of the hearing aid 112 may also be active and detect background audio signals, in addition to the coil of the hearing aid 112 detecting the wireless signal carried by the electromagnetic field 110.

One of the fundamental issues with induction loop systems 100 is that the size of the applied induction loop 108 affects the impedance *Z* of the loop 108. Further, the impedance *Z* of the loop 108 is frequency dependent, meaning that an input audio signal with one frequency *F1* may experience different impedance *Z* than an input audio signal with another frequency *F2.* This is shown in more details in Figure 1B. Input audio signals with lower frequencies *F* (marked with minus (-) signs) may be associated with lower impedances *Z* (likewise marked with minus (-) signs), whereas input audio signals with higher frequencies *F* may be associated with higher impedances *Z.*

In Figure 1B, it is assumed that no frequency dependent amplitude correction/adaptation is used. As a result, lower impedances *Z*-, corresponding to lower frequencies *F*-, may cause the electric current *I* flowing in the loop 108 to be higher (indicated with plus (+) signs). Likewise higher impedances *Z,* corresponding to higher frequencies *F*, may cause the electric current *I* flowing in the loop 108 to be lower. As a result, the intensity/level of the electric current *I* in the loop 108 may not be constant throughout the used frequency range (e.g. from *F*---- to *F*) and this may cause the volume of the output audio signal heard by the listener 114 to vary. In other words, the frequency response of the output audio signal heard by the listener 114 may vary, which is not desired.

Moreover, there is an International standard, which establishes the intensity of the magnetic field 110 and the frequency response needed from the system 100. The standard specifies that over a range from 100 Hz to 5 kHz, the output level (=volume) of the output audio signals shall be within a predetermined limits of +/- 3dB relative to the signal at 1 kHz. In order to fulfil this requirement, it may be that personnel may need to manually configure the induction loop system 100 or install a frequency response corrector (e.g. an equalizer) to the system 100. This may take place by the personnel measuring the magnetic field strength and manually adjusting an equalizer accordingly. By performing such manual adaptation, the output volume (level) of the output audio signal may be substantially even throughout the frequency range and fulfil the requirements. However, such manual work is time consuming and a cumbersome task.

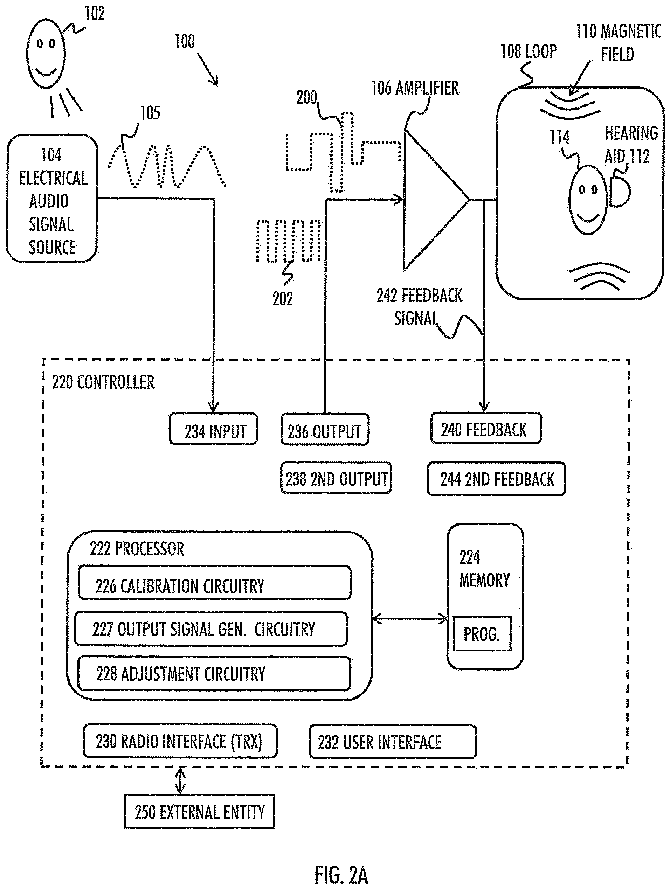

Therefore, there is provided, as shown in Figure 2A, a control device (i.e. a controller) 220 for the induction loop system 100. However, unlike in Figure 1, the input electrical audio signal 105 from the electrical audio signal source 104 is not conveyed directly to the amplifier 106, but to the controller 220, which may perform automatic amplitude adaptation to the input electrical audio signal 105, convert the input electrical audio signal 105 into an output signal 200, and then transfer the output signal 200 to the amplifier 106. As a result, there is no need for manual configuration of the induction loop system 100 in order to satisfy the output level requirement with respect to frequency *F.* Moreover, there is no need to adapt the induction loop 108 manually to the used amplifier 106. This enables that different loops may be connected to the amplifier 106 without a need for manually performing the frequency response correction.

Let us look at the proposal of Figure 2A closer. The control device 220 may comprise an input interface 234 for receiving the input electrical audio signal 105 from the electrical audio signal source 104. The interface 234 may be any of the ports used for reception of audio signals, such as a phone connector (also known as audio jack) from a microphone 104, for example. The input electrical audio signal 105 may be conveyed via a wire from the electrical audio signal source 104 or the input electrical audio signal 105 may be received wirelessly from the electrical audio signal source 104.

The controller 220 may further comprise an output interface 236 for transmitting the output signal 200 to the induction loop amplifier 106. The output interface 236 may be capable of conveying digital signals, in case the input electrical audio signal 105 is converted into a digital output signal 200.

In an embodiment, the controller 220 and the amplifier 106 are integrated to one structural entity. Then an amplifying entity of the induction loop system 100 may comprise the controller 220 and the amplifier 106 (and an amplifier 107). In another embodiment, the controller 220 and the amplifier 106 are different structural entities.

The controller 220 may further comprise at least one processor 222 and at least one memory 224 including a computer program code (PROG), wherein the at least one memory 224 and the computer program (PROG) code are configured, with the at least one processor 222, to cause the controller 220 to perform various functions, according to different embodiments. The memory 224 may be implemented using any suitable data storage technology, such as semiconductor based memory devices, flash memory, magnetic memory devices and systems, optical memory devices and systems, fixed memory and removable memory.

In order to perform the automatic frequency response correction for the output signal 200 which is to-be-fed to the amplifier 106, the controller 220 may be caused to perform a calibration phase. In step 300, the controller 220 may generate a calibration signal 202 having a known amplitude and frequency, as shown in Figure 3. The calibration signal 202 may also be called a stimulus, a calibration stimulus, or a test signal. In an embodiment, the calibration 202 signal is in digital form. In an embodiment, the calibration 202 signal is in analog form. In an embodiment, the calibration signal 202 is a multi-tone signal having different frequencies.

In an embodiment, the known frequency of the calibration 202 signal is the maximum frequency of a predetermined frequency range. The predetermined frequency range may be anything. However, in an embodiment, it is from 100 Hz to 5 kHz. In an embodiment, the maximum frequency may correspond to 5 kHz. Signals having the maximum frequency experience highest impedance Z, as shown in Figure 1B. Therefore, it may be beneficial to perform the calibration or the first calibration step with the highest impedance/resistance Z in order to detect what the maximum attenuation of the current in the loop 108 is.

In an embodiment, the controller 220 may itself generate the calibration signal 202. In such case, any input audio signal need not be received. However, in another embodiment, the controller 220 may first acquire the input audio signal and generate the calibration signal 202 on the basis of the received audio signal. In such case, the input audio signal may be seen as an input calibration audio signal. The received input audio signal may be of predetermined frequency. In an embodiment, this may correspond to the maximum frequency of the predetermined frequency range. The controller may then generate the calibration signal 202 to have the maximum operation frequency and the known amplitude. In yet one embodiment, the calibration signal 202 may be fed to the controller 220 from an external entity 250.

The known amplitude of the calibration signal 202 may in an embodiment correspond to the maximum amplitude allowed by the amplifier 106. In case the controller 220 generates the calibration signal 202 on the basis of the received input audio signal, the controller 220 may apply the frequency of the input audio signal but the controller 220 may adjust the amplitude of the received input amplitude signal to correspond to the maximum amplitude allowed by the amplifier 106, for example.

In an embodiment, in case many calibration signals are applied, the amplitude of each of the calibration signals may remain the same (known). However, the frequency of different calibration signals may be different so as to sweep through the whole frequency range, for example.

Thereafter, the controller 220 may, in step 302, feed the calibration signal 202 to the induction loop amplifier 106. The feed of the calibration signal 202 may be performed via the output interface 236.

As said, the used frequency of the signal 202 and the used induction loop 108 may have effect on the electric current flowing in the loop 108, i.e. the electric current flowing at the output of the induction loop amplifier 106. Therefore, in step 304, the controller 220 may detect the level of electric current at the output of the induction loop amplifier 106.

In an embodiment, the controller 220 may further comprise a feedback interface 240. In this case, the controller 220 may detect the level of electric current at the output of the induction loop amplifier 106 by receiving a feedback signal 242 from the output of the induction loop amplifier 106 via the feedback interface 240, as shown in Figure 2B. This closed-loop type of feedback may be advantageous as then the controller 220 always notices immediately any changes in the electric current at the output of the amplifier 106. In another embodiment, the level of the electric current (e.g. the intensity/level of the electric current in amperes) may be signalled to the controller 220 by using an external measuring device which transmits an indication of the level of electric current to a radio interface 230 of the controller 220 wirelessly, for example. In this embodiment, no feedback interface 240 may be needed.

In step 306, the controller 220 may then determine an adjustment model 400 of Figure 4 on the basis of the detected level of electric current and the known amplitude and frequency. As shown in Figure 4, the adjustment model 400 may be for adjusting the amplitude of a to-be-fed output signal 200 based on the frequency of a to-be-received input electrical audio signal 105 such that the level of the electric current at the output of the induction loop amplifier 106 (i.e. in the loop 108) is within predetermined limits (marked with at least substantially constant I in Figure 400). The predetermined limits may define that the level (e.g. volume) of the output analog signal may, regardless of the frequency of the input electrical audio signal 105, vary within +/- 3 dB as compared to the level at 1 kHz frequency. Typically this means that the amplitude of the output signal 200 having lower frequencies *F* need to be decreased compared to the amplitude of the output signal 200 having higher frequencies *F.* Such amplitude decrease is shown with minus (-) signs after amplitude A. Naturally, increase of the amplitude *A* is possible, if seen appropriate. This may enable the induction loop system 100 to meet the system standards.

Although depicted with a table-like model, the adjustment model 400 may be an equation, correction/weighting factor, or anything which the controller 220 may use to adjust the amplitude of the output signal 200 depending on the frequency of the received input electrical audio signal 105.

In an embodiment, it is possible to generate the correction model 400 on the basis of one calibration signal 202 (wherein the frequency and amplitude of the calibration signal 202 are known). In order to do this, there may be some prior knowledge of the amplifier characteristics. For example, if it is known that the frequency dependency for the current flow is linear with a known slope, use of only one calibration signal 202 may be enough.

In an embodiment, where the amplifier 106 and the controller 220 are comprised in one single structural entity, the controller 220 may be basically paired with a certain amplifier 106. Then the controller 220 may be preconfigured with information of the frequency response of the paired amplifier 106. Then, the unknown factor in the frequency response arises from the used induction loop 108 (such as the length, material, etc.). By connecting the loop 108 to the controller-amplifier -entity, the loop 108 generates an unknown load to the system. By performing the automatic frequency response correction as explained, this unknown factor caused by the loop 108 may be taken into account in the generation of the adjustment model 400.

However, in another embodiment, the controller 220 may generate a plurality of calibration signals 202, each having a known amplitude and frequency, wherein at least the frequencies between different calibration signals are different and within a predetermined frequency range. The predetermined frequency range may be, e.g. from 100 Hz to 5 kHz. Consequently, as was the case in Figure 3, the controller 220 may then feed the calibration signals 202 consecutively to the induction loop amplifier 106 and detect, for each of the calibration signals, the level of electric current at the output of the induction loop amplifier 106. By using these multiple detected electric levels for different frequencies, the controller 220 may determine the adjustment model 400. As a result, the controller 220 becomes aware of the frequency response of the amplifier 106. In other words, the controller 220 uses at least two different frequencies in the calibration signals 202 and thus obtains knowledge of how the amplifier 106 affects to calibration signals 202 having different frequencies.

This option of using plurality calibration signals 202 may ensure that the established adjustment model 400 is accurate over the whole frequency range. Further, no prior knowledge of the amplifier 106 behaviour (e.g. gain for different frequencies) is needed. This may enable the controller 220 to be used with any amplifier 106.

As a result, the controller 220 may have obtained knowledge of the adjustment model 400 for the frequency response correction. The controller 220 may apply the adjustment model 400 during operation of the induction loop system 100.

In an embodiment, as shown in Figures 2A, 2B, and 5, the controller 220 may in step 500 receive the input electrical audio signal 105. The reception may be via the input interface 234, for example. In step 502, the controller 202 may measure the frequency of the received input electrical audio signal 105. It may be noted that the input electrical audio signal 105, based e.g. on the voice of the speaker 104, may have different frequencies, as is the case in Figures 2A and 2B.

In step 504, the controller 220 may generate the output signal 200 on the basis of the received input electrical audio signal 105. For example, the frequency of the inputted electrical audio signal 105 may define the frequency of the output signal 200. In step 506, the controller 220 may then adjust the amplitude of the output signal 200 on the basis of the adjustment model 400 and the measured frequency/-ies.

For example, as shown in Figure 2B, the controller 220 may detect that there are three different frequencies *F1, F2,* and *F3* in the input electrical audio signal 105. When generating the output signal 200, the controller 220 may keep the frequencies of the output signal 200 the same as in the input electrical audio signal 105. However, in order to provide substantially even frequency response to the listener 114, the controller 220 may advantageously adjust the output signal 200 based on the frequency of the input electrical audio signal 105, and the adjustment model 400. In this example of Figure 2B, the controller 220 has decreased the amplitude levels *A1* and A3 because they correspond to lower frequencies *F1* and *F3* than the frequency *F1* (amplitude level *A1* corresponds to the frequency level of *F1*).

It may be noted that the amplitude of the input electrical audio signal 105 may vary as well, depending on the voice detected by the electrical audio signal source 104. However, for the sake of simplicity, such varying is not depicted here. It may be said, however, that the adjustment model 400 may indicate how the amplitude associated with certain frequency needs to be adjusted, regardless of the amplitude level of the input electrical audio signal 105. Further, it may be noted that, for the sake of clarity, the output signal 200 does not depict the sampling used to derive the output signal 200.

Thereafter, in step 508, the controller 220 may feed the output signal 200 to the induction loop amplifier 106 via the output interface 236 so that the amplifier 106 may amplify the signal 200 and feed the signal 200 to the loop 108.

In an embodiment, the controller 220 may perform an analog-to-digital conversion to the received analog electrical audio signal 105 in order to generate the output signal 200 in digital form. For this reason, the controller 220 may comprise an analog-to-digital converter (ADC).

In yet one embodiment, the received input electrical audio signal 105 is already in digital form, in which case no ADC is needed. The digital electric audio signal 105 may have been received from an external digital electrical audio signal source, such as from the external entity 250.

However, in one embodiment, the output signal is in analog form. In this embodiment, the control device 220 may further comprise a digital-to-analog converter (DAC) in order to convert any digitally processed data, such as digital electric audio signal 105, into an analog output signal 200.

In one embodiment, the analog input electrical audio signal 105 is first converted into digital data, the data is processed digitally by the controller 220, and then the data is converted back to analog form as analog output signal 200 before outputting the signal 200 to the amplifier 106. The digital processing may comprise adjusting the amplitude of the input signal 105 on the basis of the adjustment model 400, for example.

In an embodiment, the controller 220 comprises a second output interface 238 for transmitting a second output signal to a second induction loop amplifier 107, as shown in Figures 2A and 6. The controller 220 may generate the second output signal on the basis of the received electrical audio signal 105 and, in the same manner as for the (first) output signal 200, adjust the amplitude of the second output signal on the basis of the adjustment model 400 and the detected frequency of the input electrical audio signal 105.

However, for the second output signal, the controller 220 may perform a predetermined phase shift. An example phase shift may be 90 degrees so as to ensure smooth field strength of the electromagnetic field 110. Thereafter, the controller 220 may feed the second, phase shifted output signal to the second induction loop amplifier 107 via the second output interface 238. As shown in Figure 6, the amplifier 106 may run the induction loop 108 whereas the second amplifier 107 may feed electric current to a second induction loop 109.

In an embodiment, as shown in Figure 6 for example, each of the induction loop amplifier(s) is a differential amplifier having differential outputs. This is depicted with two outputs leaving the amplifier(s) 106, 107.

In an embodiment, the amplifier 106, 107 is a voltage amplifier, as opposed to being a current amplifier. Therefore, the proposal enables the use of simple voltage amplifiers as the induction loop amplifiers 106, 107. Voltage amplifiers are more robust, than current amplifiers, to different output loads, such as in this case to different induction loops 108. Further, there is a wide variety of voltage amplifiers in the market.

In an embodiment, the amplifiers 106, 107 are connected in parallel and feed electric current to a single common inductive loop 700. This may be beneficial because then the electric current feeding capacity may be increased compared to a case where only one amplifier is feeding one loop. However, when the amplifiers 106, 107 are in parallel connection with each other, as shown in Figures 7A and 7B, for example, there is a risk that the amplifiers 106, 107 start competing with each other. In one scenario, due to the gain difference of the amplifiers 106, 107, the other amplifier may start feeding electric current to the other amplifier, which may damage the receiving amplifier. Typically a resistor has been used to avoid such phenomenon. However, the resistor may cause losses in the gain of the amplifiers. Further, use of resistors may cause power losses. Therefore, another solution for enabling the parallel coupling of the amplifiers 106, 107 may be needed.

In an embodiment, as shown in Figure 7A, the induction loop amplifiers 106, 107 are connected in series with a transformer 702. The use of transformer 702 may be beneficial over the use of resistor due to the fact that transformer 702 may cause smaller gain losses in the system. The power handling capacity of the transformer 702 may be matched according to the gain differences of the amplifiers 106, 107. The used windings of the coils in the transformer 702 and the material of the transformer 702 may be matched according to the applied frequency range (e.g. from 100 Hz to 5 kHz) and the maximum level of electric current used.

As shown in Figure 7A, the voltage difference at the output of the amplifiers 106, 107, which is due to the gain differences of the amplifier 106, 107, may advantageously be cancelled by connecting the transformer 702 in series with the amplifiers 106, 107. The common loop 700 is then connected in series with the transformer 702.

Figure 7B depicts an embodiment utilizing a plurality of transformers 702 and 704. Let us denote these as a first and as a second transformer, respectively. Multiple transformers 702, 704 may be needed in case amplifiers 106, 107 are differential amplifiers having differential outputs. Let us denote these outputs as a first and as a second output. In this case, the first outputs of each of the two amplifiers 106, 107 are connected in series with the first transformer 702, whereas the second outputs of the amplifiers 106, 107 are connected in series with the second transformer 704. The common induction loop 700 is then connected in series with the output of the transformers 702, 704. Again, the transformers 702, 704 may be used to cancel the voltage difference at the outputs of the differential amplifiers 106, 107.

It should be noted that the presence of the feedback signal 242 is not depicted in Figures 7A and 7B for the sake of clarity of the illustration.

Let us then take a look at one embodiment shown in Figure 8. In this embodiment, the controller 220 may further comprise a second feedback interface 244. This feedback interface 244 may be different than the feedback interface 240. The controller 220 may acquire information indicating the level of induced magnetic field 110 via the second feedback interface 244. The level of induced magnetic field 110 (measured in weber (Wb), Gauss or by indicating the fields strength in Amperes per meter (A/m), for example) may be indicated in a second feedback signal 802. The induced magnetic field 110 may be measured with a measuring device 800, such as a fluxmeter or a field strength meter. The electromagnetic field strength may be measured throughout the whole frequency range, such as over frequencies from 100 Hz to 5 kHz. Such measurement may be done by stepping these frequencies with appropriate density, for example. In an embodiment, the second feedback interface 244 may be a communication interface for receiving e.g. wireless radio frequency communication carrying the information about the intensity of the magnetic flux. The radio frequency communication may utilize wireless local area network (WLAN) or Bluetooth, for example. In another embodiment, the second feedback interface 244 is a coupling which receives a cable from the external magnetic flux measurer 800, such as the fluxmeter.

There may be a plurality of measuring devices 800 in the area so that the intensity of the magnetic field is obtained in different places of the area, such as a room. The controller 220 may, e.g., average the received indication of the magnetic field level so as to obtain an overall level of the magnetic field flux in the area.

As the controller 220 receives the information of the overall magnetic flux field level in the area, the controller 220 may determine the adjustment model 400 further on the basis of the indicated level of induced magnetic field, in addition to the detected electric current level in the loop 108 and the known amplitude and frequency of the calibration signal. This may be beneficial as the metal structures in the area, such as in the room, may change the induced magnetic field, compared to magnetic field generated in an empty space. Different frequencies may experience different type of effect caused by the metal structures in the area. If not taken into account, the frequency response experienced by the listener 114 may vary and affect the listening experience. Owing to the advantageous feature of measuring the induced magnetic field and using this information automatically in the generation of the adjustment model, the generated adjustment model 400 provides a smooth frequency response over the whole breadth of used frequency range. For example, if it is detected that the magnetic flux level is decreased when using audio signals with higher frequencies *F*, the adjustment model 400 may take this into account by increasing the amplitudes of the output signals 200 when such higher frequency audio signals 105 are present.

Let us look again at Figure 2A. The controller 220 may further comprise a network communication interface 230 (TRX comprising hardware and/or software for realizing communication connectivity according to one or more communication protocols. The TRX 230 may provide the controller 220 with communication capabilities to access a radio access network, for example. The communication may take place over radio frequencies (e.g. WLAN, Bluetooth, cellular protocols), magnetic fields, infrared, wire (such as via a high definition multimedia interface, HDMI, cable), for example. The existence of such communication capability avails several options, as is explained below.

In an embodiment, upon detecting that a malfunction in the induction loop system 100 of Figure 2 has occurred, the controller 220 may automatically indicate to a predetermined network destination via the communication interface 230 that the malfunction has occurred. For example, it may be that, for example, the amplifier 106, 107 or the loop 108, 109, 700 is damaged. In such case the frequency response of the induced magnetic field 110 may become uneven or a lack of any magnetic field 110 may be detected. Thus, the malfunction may be detected by analysing the information carried in any of the feedback signals 242, 802, for example. One example is that the feedback signal 802 indicates lack of any magnetic field flux 110, which may be an indication that the loop 108, 109, 700 and/or the amplifier 106, 107 is broken. Another example is that the feedback signal 242 indicates that no current is coming out of the amplifier 106, 107. In such case, it may be determined that the amplifier 106, 107 is broken. In yet one embodiment, it may be detected that the frequency response detected from either of the feedback signals 242, 802 rapidly changes. This may indicate that the loop 108, 109, 700 and/or the amplifier 106, 107 is malfunctioning.

Typically such malfunction may have been noted by the listener 114 and a notice by him/her may be needed before the supervisor noting the problem and before being able to fix the problem and/or taking a secondary hardware into use. However, owing to the advantageous manner of detecting such malfunction and indicating the malfunction automatically, the problematic situation may be noticed and corrected more quickly. The predetermined network destination to which the controller 220 send an indication of the malfunction may be, e.g. the organizer/supervisor of the event where the induction loop system 100 is being used. The controller 220 may be preconfigured with, e.g. IP address of the network destination. The controller 220 may further comprise, e.g. lights, such as light emitting diodes (LEDs), which may blink or burn when any malfunction is detected.

In one embodiment, the controller 220 may periodically transmit notification messages to a predetermined network destination over the communication interface 230. These notification messages may carry an indication of a proper operation of the system. In case the periodic message is not transmitted as planned, the predetermined network destination, such as the supervisor of the induction loop system 100, may immediately detect that something is not correct and take corrective actions. The notification message may also carry information of the detected malfunction, such as that the amplifier 106, 107 seems to be broken. These periodic notification messages may be transmitted automatically by the controller 220.

In yet one embodiment, the communication interface 230 may enable a reception of information, wherein the information is for reconfiguring the controller 220. This enables a remote maintenance and/or re-configuration of the controller 220. For example, the configuration information may cause the controller 220 to apply an additional correction factor for the adjustment model 400, for example. It may be that the supervisor of the area, where the induction loop system 100 is being applied, has noticed that the volume of the output audio signal to the listener 114 is too low, for example. In such case, the supervisor may decide to transmit information to the controller 220 that the amplitude of every frequency is to be increased.

In an embodiment, the controller 220 may generate at least one notification signal having a predetermined frequency. The amplitude of the notification signal may be based on the adjustment model 400. The notification signal may be self-generated and not based on a received input electrical audio signal 105. Examples of notification signals may be announcements to the public, bell rings for indicating e.g. intermediate times, for example.

In an embodiment, the TRX 230 may receive an indication from an external entity 250 according to which the controller 230 needs to generate a specific sound, such as a bell ring. Thus, an external signal source may be utilized for feeding information which the controller 220 may use in the generation of the notification signal. E.g. the controller 220 may itself select the used frequency of the to-be-generated notification signal and select the amplitude from the adjustment model 400 on the basis of the selected frequency.

Then the controller 220 may feed the generated at least one notification signal to the induction loop amplifier 106, 107. The feed may be performed via at least one of the output interfaces 234 and 236.

The control apparatus/device 220 may also comprise a user interface 232 comprising, for example, at least one keypad, a microphone, a touch display, a display, a speaker, etc. The user interface 232 may be used to control the controller 220 by the user.

The processor 222 may comprise a calibration circuitry or module 226 for performing the generation of the adjustment model 400 according to any of the embodiments. An output signal generation circuitry/module 227 may be responsible of generating the output signal 200, according to any of the embodiments. An adjustment circuitry/module 228 may be responsible of performing the adjustment of the output signals 200 before feeding them to the amplifier 106, 107, according to any of the embodiment.

As used in this application, the term 'circuitry' or 'module' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or soft-ware, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. Coding of software for carrying out the embodiments as shown and described is well within the scope of a person of ordinary skill in the art.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A control device (220) for an induction loop system, comprising:
an input interface (234) for receiving an input electrical audio signal (105) from an electrical audio signal source (104);
an output interface (236) for transmitting an output signal (200) to an induction loop amplifier (106), wherein the induction loop amplifier (106) is configured to feed an induction loop (108); and
at least one processor (222) and at least one memory (224) including a computer program code, wherein the at least one memory (224) and the computer program code are configured, with the at least one processor (222), to cause the control device (220) at least to:
generate a calibration signal (202) having a known amplitude and frequency;
feed the calibration signal (202) to the induction loop amplifier (106);
detect level of electric current at the output of the induction loop amplifier (106); and
determine an adjustment model (400) on the basis of the detected level of electric current and the known amplitude and frequency, wherein the adjustment model (400) is for adjusting the amplitude of a to-be-fed output signal (200) based on the frequency of a to-be-received input electrical audio signal (105) such that the level of the electric current at the output of the induction loop amplifier (106) is within predetermined limits.

2. The control device (220) of claim 1, further comprising:
a feedback interface (240), wherein the at least one memory (224) and the computer program code are configured, with the at least one processor (222), to cause the control device (220) further to:
detect the level of electric current at the output of the induction loop amplifier (106) by receiving a feedback signal (242) from the output of the induction loop amplifier (106) via the feedback interface (240).

3. The control device (220) of any of claims 1 to 2, wherein the known frequency of the calibration signal (202) is the maximum frequency of a predetermined frequency range.

4. The control device (220) of any of claims 1 to 3, wherein the at least one memory (224) and the computer program code are configured, with the at least one processor (222), to cause the control device (220) further to:
generate a plurality of calibration signals (202), each having a known amplitude and frequency, wherein at least the frequencies between different calibration signals (202) are different and within a predetermined frequency range;
feed the calibration signals (202) consecutively to the induction loop amplifier (106);
for each of the calibration signals (202), detect the level of electric current at the output of the induction loop amplifier (106); and
determine the adjustment model (204) on the basis of the detected levels of electric current and the known amplitudes and frequencies.

5. The control device (220) of any of claims 1 to 4, wherein the at least one memory (224) and the computer program code are configured, with the at least one processor (222), to cause the control device (220) further to:
cause a reception of the input electrical audio signal (105);
measure the frequency of the received input electrical audio signal (105);
generate the output signal (200) on the basis of the received input electrical audio signal (105);
adjust the amplitude of the output signal (200) on the basis of the adjustment model (400); and
feed the output signal (200) to the induction loop amplifier (106) via the output interface (236).

6. The control device (220) of any of claims 1 to 5, further comprising:
a second output interface (238) for transmitting a second output signal to a second induction loop amplifier (107), wherein the at least one memory (224) and the computer program code are configured, with the at least one processor (222), to cause the control device (220) further to:
feed the output signals to the induction loop amplifiers (106, 107) via the output interfaces (236, 238), wherein the induction loop amplifiers (106, 107) are connected in series with at least one transformer (700, 702).

7. The control device (220) of any of claims 1 to 6, further comprising:
a network communication interface (230) for communication of information over a network, wherein the at least one memory (224) and the computer program code are configured, with the at least one processor (222), to cause the control device (220) further to:
detect whether or not a malfunction of the induction loop system has occurred; and
upon detecting that a malfunction has occurred, indicate to a predetermined network destination via the communication interface (230) that a malfunction has occurred.

8. The control device (220) of any of claims 1 to 7, further comprising:
a network communication interface (230) for communication of information over a network, wherein the at least one memory (224) and the computer program code are configured, with the at least one processor (222), to cause the control device (220) further to:
cause a reception of information, wherein the information is for reconfiguring the control device (220).

9. The control device (220) of any of claims 1 to 8, further comprising:
a second feedback interface (244), wherein the at least one memory (224) and the computer program code are configured, with the at least one processor (222), to cause the control device (220) further to:
acquire information indicating the level of induced magnetic field (110) via the second feedback interface (244); and
determine the adjustment model (400) further on the basis of the indicated level of induced magnetic field (110).

## Patentansprüche

1. Steuervorrichtung (220) für ein Induktionsschleifensystem, umfassend:
eine Eingabeschnittstelle (234) zum Empfangen eines eingehenden elektrischen Audiosignals (105) von einer elektrischen Audiosignalquelle (104),
eine Ausgabeschnittstelle (236) zum Senden eines Ausgabesignals (200) zu einem Induktionsschleifenverstärker (106), wobei der Induktionsschleifenverstärker (106) konfiguriert ist zum Zuführen zu einer Induktionsschleife (108), und
wenigstens einen Prozessor (222) und wenigstens einen Speicher (224) mit darin einem Computerprogrammcode, wobei der wenigstens eine Speicher (224) und der Computerprogrammcode konfiguriert sind, um in Verbindung mit dem wenigstens einen Prozessor (222) die Steuervorrichtung (220) zu veranlassen wenigstens zum:
Erzeugen eines Kalibrierungssignals (202) mit einer bekannten Amplitude und Frequenz,
Zuführen des Kalibrierungssignals (202) zu dem Induktionsschleifenverstärker (106),
Erfassen der Größe des elektrischen Stroms an dem Ausgang des Induktionsschleifenverstärkers (106), und
Bestimmen eines Einstellungsmodells (400) basierend auf der erfassten Größe des elektrischen Stroms und der bekannten Amplitude und Frequenz, wobei das Einstellungsmodell (400) dazu dient, die Amplitude eines zuzuführenden Ausgabesignals (200) basierend auf der Frequenz eines zu empfangenen eingehenden elektrischen Audiosignals (105) derart einzustellen, dass die Größe des elektrischen Stroms an dem Ausgang des Induktionsschleifenverstärkers (106) innerhalb von vorbestimmten Grenzen ist.

2. Steuervorrichtung (220) nach Anspruch 1, die weiterhin umfasst:
eine Rückkopplungsschnittstelle (240), wobei der wenigstens eine Speicher (224) und der Computerprogrammcode konfiguriert sind, um in Verbindung mit dem wenigstens einen Prozessor (222) die Steuervorrichtung (220) weiterhin zu veranlassen zum:
Erfassen der Größe des elektrischen Stroms an dem Ausgang des Induktionsschleifenverstärkers (106) durch das Empfangen eines Rückkopplungssignals (242) von dem Ausgang des Induktionsschleifenverstärkers (106) über die Rückkopplungsschnittstelle (240).

3. Steuervorrichtung (220) nach Anspruch 1 oder 2, wobei die bekannte Frequenz des Kalibrierungssignals (202) die maximale Frequenz eines vorbestimmten Frequenzbereichs ist.

4. Steuervorrichtung (220) nach einem der Ansprüche 1 bis 3, wobei der wenigstens eine Speicher (224) und der Computerprogrammcode konfiguriert sind, um in Verbindung mit dem wenigstens einen Prozessor (222) die Steuervorrichtung (220) weiterhin zu veranlassen zum:
Erzeugen einer Vielzahl von Kalibrierungssignalen (202), die jeweils eine bekannte Amplitude und Frequenz aufweisen, wobei wenigstens die Frequenzen zwischen verschiedenen Kalibrierungssignalen (202) verschieden sind und innerhalb eines vorbestimmten Frequenzbereichs liegen,
Zuführen der Kalibrierungssignale (202) aufeinanderfolgend zu dem Induktionsschleifenverstärker (106),
für jedes der Kalibrierungssignale (202), Erfassen der Größe des elektrischen Stroms an dem Ausgang des Induktionsschleifenverstärkers (106), und
Bestimmen des Einstellungsmodells (204) basierend auf den erfassten Größen des elektrischen Stroms und den bekannten Amplituden und Frequenzen.

5. Steuervorrichtung (220) nach einem der Ansprüche 1 bis 4, wobei der wenigstens eine Speicher (224) und der Computerprogrammcode konfiguriert sind, um in Verbindung mit dem wenigstens einen Prozessor (222) die Steuervorrichtung (220) weiterhin zu veranlassen zum:
Veranlassen des Empfangens des eingehenden elektrischen Audiosignals (105),
Messen der Frequenz des empfangenen eingehenden elektrischen Audiosignals (105),
Erzeugen des Ausgabesignals (200) basierend auf dem empfangenen eingehenden elektrischen Audiosignal (105),
Einstellen der Amplitude des Ausgabesignals (200) basierend auf dem Einstellungsmodell (400), und
Zuführen des Ausgabesignals (200) zu dem Induktionsschleifenverstärker (106) über die Ausgabeschnittstelle (236).

6. Steuervorrichtung (220) nach einem der Ansprüche 1 bis 5, die weiterhin umfasst:
eine zweite Ausgabeschnittstelle (238) zum Senden eines zweiten Ausgabesignals zu einem zweiten Induktionsschleifenverstärker (107), wobei der wenigstens eine Speicher (224) und der Computerprogrammcode konfiguriert sind, um in Verbindung mit dem wenigstens einen Prozessor (222) die Steuervorrichtung (220) weiterhin zu veranlassen zum:
Zuführen der Ausgabesignale zu den Induktionsschleifenverstärkern (106, 107) über die Ausgabeschnittstellen (236, 238), wobei die Induktionsschleifenverstärker (106, 107) in Reihe mit wenigstens einem Transformator (700, 702) verbunden sind.

7. Steuervorrichtung (220) nach einem der Ansprüche 1 bis 6, die weiterhin umfasst:
eine Netzwerkkommunikationsschnittstelle (230) für das Kommunizieren von Informationen über ein Netzwerk, wobei der wenigstens eine Speicher (224) und der Computerprogrammcode konfiguriert sind, um in Verbindung mit dem wenigstens einen Prozessor (222) die Steuervorrichtung (220) weiterhin zu veranlassen zum:
Erfassen, ob eine Fehlfunktion des Induktionsschleifensystems aufgetreten ist oder nicht, und
wenn das Auftreten einer Fehlfunktion erfasst wird, Angeben für ein vorbestimmtes Netzwerkziel über die Kommunikationsschnittstelle (230), dass eine Fehlfunktion aufgetreten ist.

8. Steuervorrichtung (220) nach einem der Ansprüche 1 bis 7, die weiterhin umfasst:
eine Netzwerkkommunikationsschnittstelle (230) für das Kommunizieren von Informationen über ein Netzwerk, wobei der wenigstens eine Speicher (224) und der Computerprogrammcode konfiguriert sind, um in Verbindung mit dem wenigstens einen Prozessor (222) die Steuervorrichtung (220) weiterhin zu veranlassen zum:
Veranlassen des Empfangens von Informationen, wobei die Informationen für das Neukonfigurieren der Steuervorrichtung (220) dienen.

9. Steuervorrichtung (220) nach einem der Ansprüche 1 bis 8, die weiterhin umfasst:
eine zweite Rückkopplungsschnittstelle (244), wobei der wenigstens eine Speicher (224) und der Computerprogrammcode konfiguriert sind, um in Verbindung mit dem wenigstens einen Prozessor (222) die Steuervorrichtung (220) weiterhin zu veranlassen zum:
Erhalten von Informationen, die die Größe eines induzierten Magnetfels (110) angeben, über die zweite Rückkopplungsschnittstelle (244), und
Bestimmen des Einstellungsmodells (400) weiterhin basierend auf der angegebenen Größe des induzierten Magnetfelds (110).

## Revendications

1. Dispositif de commande (220) pour système de boucle d'induction, comprenant :
une interface d'entrée (234) permettant de recevoir un signal audio électrique d'entrée (105) émis par une source de signal audio électrique (104) ;
une interface de sortie (236) permettant de transmettre un signal de sortie (200) à un amplificateur de boucle d'induction (106), dans lequel l'amplificateur de boucle d'induction (106) est conçu pour alimenter une boucle d'induction (108) ; et
au moins un processeur (222) et au moins une mémoire (224) incluant un code de programme d'ordinateur, dans lequel l'au moins une mémoire (224) et le code de programme d'ordinateur sont configurés, avec l'au moins un processeur (222), pour amener le dispositif de commande (220) à, au moins :
générer un signal d'étalonnage (202) ayant une amplitude et une fréquence connues ;
envoyer le signal d'étalonnage (202) à l'amplificateur de boucle d'induction (106) ;
détecter le niveau de courant électrique à la sortie de l'amplificateur de boucle d'induction (106) ; et
déterminer un modèle de réglage (400) en fonction du niveau de courant électrique détecté et de l'amplitude et de la fréquence connues, dans lequel le modèle de réglage (400) est destiné au réglage de l'amplitude d'un signal de sortie (200) à envoyer en fonction de la fréquence d'un signal audio électrique d'entrée (105) à recevoir, de façon que le niveau du courant électrique à la sortie de l'amplificateur de boucle d'induction (106) se situe dans des limites prédéterminées.

2. Dispositif de commande (220) selon la revendication 1, comprenant, en outre :
une interface de rétroaction (240), dans lequel l'au moins une mémoire (224) et le code de programme d'ordinateur sont configurés, avec l'au moins un processeur (222), pour amener le dispositif de commande (220) à, en outre :
détecter le niveau de courant électrique à la sortie de l'amplificateur de boucle d'induction (106) grâce à la réception d'un signal de rétroaction (242) délivré en sortie par l'amplificateur de boucle d'induction (106) et transmis par l'interface de rétroaction (240).

3. Dispositif de commande (220) selon l'une quelconque des revendications 1 à 2, dans lequel la fréquence connue du signal d'étalonnage (202) est la fréquence maximale d'une gamme de fréquence prédéterminée.

4. Dispositif de commande (220) selon l'une quelconque des revendications1 à 3, dans lequel l'au moins une mémoire (224) et le code de programme d'ordinateur sont configurés, avec l'au moins un processeur (222), pour amener le dispositif de commande (220) à, en outre :
générer une pluralité de signaux d'étalonnage (202), chacun ayant une amplitude et une fréquence connues, dans lequel au moins les fréquences entre différents signaux d'étalonnage (202) diffèrent et se situent dans une gamme de fréquence prédéterminée ;
envoyer les signaux d'étalonnage (202) successivement à l'amplificateur de boucle d'induction (106) ;
pour chacun des signaux d'étalonnage (202), détecter le niveau de courant électrique à la sortie de l'amplificateur de boucle d'induction (106) ; et
déterminer le modèle de réglage (204) en fonction des niveaux de courant électrique détectés et des amplitudes et fréquences connues.

5. Dispositif de commande (220) selon l'une quelconque des revendications 1 à 4, dans lequel l'au moins une mémoire (224) et le code de programme d'ordinateur sont configurés, avec l'au moins un processeur (222), pour amener le dispositif de commande (220) à, en outre :
recevoir le signal audio électrique d'entrée (105) ;
mesurer la fréquence du signal audio électrique d'entrée (105) reçu ;
générer le signal de sortie (200) en fonction du signal audio électrique d'entrée (105) reçu ;
régler l'amplitude du signal de sortie (200) en fonction du modèle de réglage (400) ; et
envoyer le signal de sortie (200) à l'amplificateur de boucle d'induction (106) par l'intermédiaire de l'interface de sortie (236).

6. Dispositif de commande (220) selon l'une quelconque des revendications 1 à 5, comprenant, en outre :
une seconde interface de sortie (238) permettant de transmettre un second signal de sortie à un second amplificateur de boucle d'induction (107), dans lequel l'au moins une mémoire (224) et le code de programme d'ordinateur sont configurés, avec l'au moins un processeur (222), pour amener le dispositif de commande (220) à, en outre :
envoyer les signaux de sortie aux amplificateurs de boucle d'induction (106, 107) par l'intermédiaire des interfaces de sortie (236, 238), dans lequel les amplificateurs de boucle d'induction (106, 107) sont branchés en série avec au moins un transformateur (700, 702).

7. Dispositif de commande (220) selon l'une quelconque des revendications 1 à 6, comprenant, en outre :
une interface de communication réseau (230) permettant de communiquer des informations sur un réseau, dans lequel l'au moins une mémoire (224) et le code de programme d'ordinateur sont configurés, avec l'au moins un processeur (222), pour amener le dispositif de commande (220) à, en outre :
détecter si un dysfonctionnement du système de boucle d'induction s'est produit ou non ; et
si la survenue d'un dysfonctionnement est détectée, indiquer à une destination du réseau prédéterminée, par le biais de l'interface de communication (230), qu'un dysfonctionnement s'est produit.

8. Dispositif de commande (220) selon l'une quelconque des revendications 1 à 7, comprenant, en outre :
une interface de communication réseau (230) permettant de communiquer des informations sur un réseau, dans lequel l'au moins une mémoire (224) et le code de programme d'ordinateur sont configurés, avec l'au moins un processeur (222), pour amener le dispositif de commande (220) à, en outre :
recevoir des informations, dans lequel les informations sont destinées à la reconfiguration du dispositif de commande (220).

9. Dispositif de commande (220) selon l'une quelconque des revendications 1 à 8, comprenant, en outre :
une seconde interface de rétroaction (244), dans lequel l'au moins une mémoire (224) et le code de programme d'ordinateur sont configurés, avec l'au moins un processeur (222), pour amener le dispositif de commande (220) à, en outre :
obtenir des informations indiquant le niveau de champ magnétique induit (110) par l'intermédiaire de la seconde interface de rétroaction (244) ; et
déterminer plus exactement le modèle de réglage (400) en fonction du niveau de champ magnétique induit (110) indiqué.
